# FASCICULE DE BREVET EUROPEEN

(11) **EP 2 478 580 B1**
(45) Date de publication et mention de la délivrance du brevet: **08.12.2021**
(21) Numéro de dépôt: 10816510.1
(22) Date de dépôt: 15.09.2010
(51) Int. Cl.: H01M 4/36, H01M 4/58, H01M 4/62, H01M 10/052

(54) **MATÉRIAU CONSTITUE DE PARTICULES COMPOSITES D'OXYDE, PROCÉDÉ POUR SA PRÉPARATION, ET SON UTILISATION COMME MATIÈRE ACTIVE D' ÉLECTRODE**
MATERIAL AUS VERBUNDOXIDPARTIKELN, VERFAHREN ZU SEINER HERSTELLUNG UND SEINE VERWENDUNG ALS ELEKTRODENAKTIVMATERIAL
MATERIAL CONSISTING OF COMPOSITE OXIDE PARTICLES, METHOD FOR PREPARING SAME, AND USE THEREOF AS ELECTRODE ACTIVE MATERIAL

(30) Priorité: 15.09.2009 CA 2678540
(43) Date de publication de la demande: 25.07.2012
(73) Titulaire: Hydro-Québec, Montréal QC H2Z 1A4 (CA)
(72) Inventeur: GUERFI, Abdelbast, Brossard Québec J4X 1W2 (CA); LABRECQUE, Jean-François, Montréal Québec H2H 1Z6 (CA); DONTIGNY, Martin, Varennes Québec J3X 1Y1 (CA); CHAREST, Patrick, Sainte-Julie Québec J3E 1P2 (CA); ZAGHIB, Karim, Longueuil Québec J4M 2M7 (CA)
(74) Mandataire: Lavoix
(86) Numéro de dépôt international: PCT/CA2010/001418
(87) Numéro de publication internationale: WO 2011/032264

(56) Documents cités:
- WO-A1-2008/088180
- WO-A1-2009/010895
- WO-A2-2008/091707
- JP-A- 2007 213 866
- JP-A- 2009 129 721
- MARTHA ET AL.: 'LiMnPO4 as an Advanced Cathode Material for Rechargeable Lithium Batteries' JOURNAL OF THE ELECTROCHEMICAL SOCIETY vol. 156, no. 7, 08 Mai 2009, pages A541 - A552, XP055022062
- YAMADA ET AL.: 'Structural and magnetic properties of Lix(MnyFe1-y)PO4 electrode materials for Li- ion batteries' JOURNAL OF POWER SOURCES vol. 189, no. 2, 15 Avril 2009, pages 1154 - 1163, XP026027614
- CHEN ET AL.: 'Structure studies on LiMn0.25Fe0.75PO4 by in-situ synchrotron X-ray diffraction analysis' JOURNAL OF POWER SOURCES vol. 189, no. 189, 2009, pages 790 - 793, XP025982801

## Description

La présente invention porte sur un matériau constitué par des particules composites d'oxyde inorganique, un procédé pour sa préparation, ainsi que son utilisation comme matière active d'électrode.

### ÉTAT DE LA TECHNIQUE

Une batterie au lithium fonctionne par circulation réversible d'ions lithium entre une électrode négative et une électrode positive, à travers un électrolyte comprenant un sel de lithium en solution dans un solvant liquide, polymère ou gel.

L'électrode négative est généralement constituée par une feuille de lithium, un alliage de lithium ou un composé intermétallique contenant du lithium. L'électrode négative peut aussi être constituée par un matériau capable d'insérer réversiblement des ions lithium, tel que par exemple du graphite ou un oxyde, ledit matériau d'insertion étant utilisé seul ou sous forme de matériau composite contenant en outre au moins un liant et un agent conférant une conduction électronique tel que du carbone.

Des oxydes complexes divers ont été étudiés comme matière active pour l'électrode positive, agissant comme matériau d'insertion réversible d'ions lithium. On peut citer en particulier les composés qui ont une structure olivine et qui répondent à la formule LiMXO₄, les composés répondant à la formule Li₂MXO₄ dans laquelle M représente au moins un métal de transition et X représente un élément choisi parmi S, P, Si, B et Ge (par exemple Li₂FeSiO₄), ainsi que les composés du type Nasicon à structure rhomboédrique qui répondent à la formule LiₓM₂(XO₄)₃ dans laquelle M représente au moins un métal de transition et X représente au moins un élément choisi parmi S, P, Si, B et Ge. Ces oxydes complexes sont généralement utilisés sous forme de particules nanométriques ou micrométriques, éventuellement enrobées de carbone et/ou liées entre elles par des liaisons carbone. La présence du carbone améliore les performances électrochimiques, en particulier lorsqu'il est sous forme d'une couche adhérente sur l'oxyde complexe.

Parmi ces oxydes, ceux dans lesquels M représente Fe, Mn ou Co sont intéressants notamment à cause de certaines de leurs propriétés électrochimiques et de leur coût relativement faible en raison de la grande disponibilité des métaux. Cependant ils présentent quelques inconvénients. Un oxyde LiMXO₄ dans lequel M est essentiellement Fe (en particulier LiFePO₄) a une bonne conductivité électronique lorsqu'il est sous forme de particules enrobées par du carbone et utilisé comme matériau d'électrode. Il peut être obtenu aisément sous forme de particules enrobées d'une couche adhérente de carbone, mais la densité d'énergie est faible à cause du voltage relativement faible (de l'ordre de 3,4 V vs Li/Li⁺). Les oxydes LiMXO₄ dans lesquels M est essentiellement Mn et/ou Co et/ou Ni (en particulier LiMnPO₄, LiCoPO₄; et LiNiPO₄) ont une tension de fonctionnement nettement plus élevée (de l'ordre de 4,1 V, 4,8 V et 5,1 V respectivement) et par conséquent une densité d'énergie élevée, mais il est difficile de les obtenir sous forme de particules enrobées d'une couche adhérente de carbone et ils ont une conductivité électronique relativement faible.

On a alors envisagé d'utiliser des particules ayant un cœur d'un oxyde LiMPO₄ et un enrobage de carbone, M représentant Fe partiellement remplacé par Mn. Mais la présence de LiFePO₄ qui a un faible potentiel (3,5 V) provoque une diminution de la densité d'énergie par rapport à l'utilisation de LiMnPO₄ seul. Lorsqu'on limite la teneur en LiFePO₄ à une valeur inférieure à 20% en poids, le voltage de la cathode est dominé par le voltage de LiMnPO₄ (4, 1 V) ce qui limite la diminution de la densité d'énergie. Un composé LiFe₍₁₋ₓ₎MnₓPO₄, qui est une solution solide, donne des résultats acceptables lorsque x reste inférieur à 0,6, c'est-à-dire que le composé LiFePO₄ est majoritaire (Réf. Yamada J. Power Sources, Volume 189, Issue 2, 15 Avril 2009, pages 1154-1163). Toutefois, il n'est pas possible d'augmenter la contribution de Mn par rapport à Fe.

Il est également connu de WO2008/088180 un matériau d'électrode positive comprenant un premier oxyde à base de lithium et un deuxième oxyde à base de lithium appliqué sur l'entière surface du premier oxyde, le second oxyde ayant une résistance plus grande et un potentiel inférieur vs le couple Li/Li+ que le premier oxyde.

### SOMMAIRE

Un objet de la présente invention est de proposer un matériau d'électrode qui a de bonnes performances lorsqu'il est utilisé comme matière active d'électrode positive dans une batterie au lithium, notamment une densité d'énergie élevée et une bonne conductivité électronique et ionique.

Les inventeurs ont trouvé qu'une couche adhérente de carbone sur un oxyde complexe peut être obtenue aisément lorsque le métal de l'oxyde exerce un effet catalytique sur la réaction qui a pour résultat le dépôt de carbone. Ils ont également constaté que, de manière surprenante, lorsque l'on dépose une couche d'un oxyde d'un métal au moins sur une partie de la surface de particules d'un oxyde complexe ayant une densité d'énergie élevée, on obtient un dépôt adhérent de carbone sans diminuer substantiellement le potentiel de fonctionnement, lorsque ledit métal a un effet catalytique vis-à-vis de ladite réaction qui a pour résultat le dépôt de carbone. Ceci permet d'augmenter la conductivité électronique, sans diminuer la densité d'énergie.

Par conséquent, selon un aspect de la présente invention, il est proposé un matériau d'électrode positive constitué de particules ayant un cœur d'un oxyde complexe OC1, un enrobage au moins partiel d'un oxyde complexe OC2 et une couche adhérente de carbone à la surface des particules d'oxyde, ledit matériau étant caractérisé en ce que l'oxyde complexe OC1 est LiMnPO₄ dans lequel Mn peut être remplacé partiellement par Co et/ou Ni, l'oxyde OC2 est un oxyde de Li et d'au moins un métal qui a un effet catalytique sur la réaction de dépôt de carbone et qui est choisi parmi Fe, Mo, Ni, Pt et Pd, et le cœur d'oxyde OC1 a une dimension moyenne de 20 nm à 100 µm, la couche d'oxyde OC2 a une épaisseur de 1 nm à 6µm, et le dépôt de carbone a une épaisseur de 0,1 nm à 100 nm.. La présence de la couche OC2 a pour effet d'une part de faciliter le dépôt d'une couche adhérente de carbone à la surface des particules d'oxydes, et d'autre part d'améliorer la conductivité du matériau lorsqu'il est utilisé comme matériau d'électrode.

Selon un autre aspect de l'invention, il est proposé un procédé d'élaboration dudit matériau d'électrode.

Un autre aspect de l'invention concerne une électrode composite dont la matière active est le matériau de l'invention, ainsi qu'une batterie au lithium dont l'électrode positive contient ledit matériau d'électrode selon l'invention.

### DESCRIPTION BRÈVE DES DESSINS

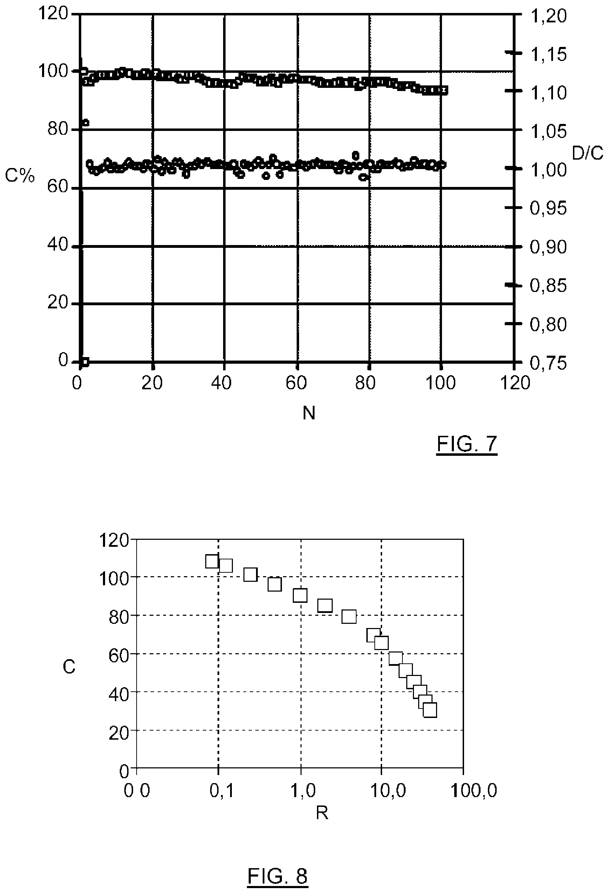

La figure 1 représente le diagramme de diffraction des rayons X de LiMnPO₄ préparé selon l'exemple 1.
La figure 2 représente le diagramme de diffraction des rayons X de particules de LiMnPO₄ enrobées de LiFePO₄ préparées selon l'exemple 1.
Les figures 3, 4 et 5 sont relatives à une cellule électrochimique ayant une électrode dont la matière active est constituée par des particules de LiMnPO₄ enrobées de LiFePO₄ et d'une couche de carbone déposée par pyrolyse d'acétate de cellulose, et elles représentent respectivement:
   - l'évolution du potentiel P (en Volts) en fonction du temps T (en heures), lors d'un fonctionnement à un régime de C/24 (fig. 3);
   - le pourcentage de capacité %C (courbe matérialisée par □□□) et le rapport décharge/charge (D/C) (courbe matérialisée par ○○○), en fonction du nombre de cycles N (fig. 4);
   - le diagramme de Ragone, c'est-à-dire la variation de la capacité C (en mAh/g) en fonction du régime de décharge R (fig. 5).

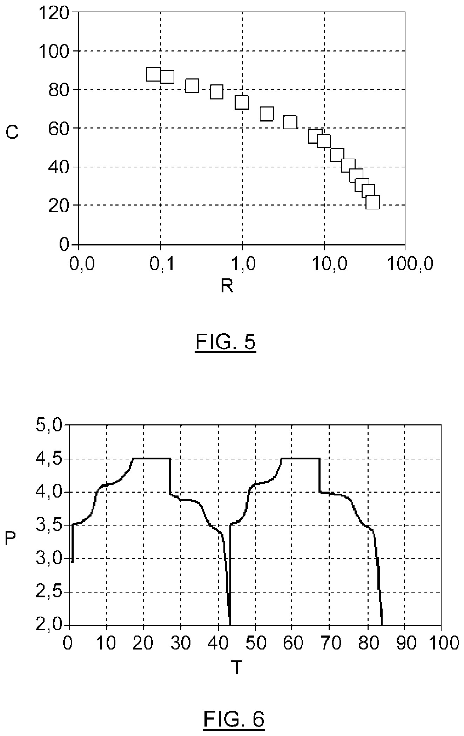

Les figures 6, 7 et 8 sont relatives à une cellule électrochimique ayant une électrode dont la matière active est constituée par des particules de LiMnPO₄ enrobées de LiFePO₄ et d'une couche de carbone déposée par pyrolyse de lactose, et elles représentent respectivement:
   - l'évolution du potentiel P (en volts) en fonction du temps T (en heures), lors d'un fonctionnement à un régime de C/24 (fig. 6);
   - le pourcentage de capacité %C (courbe matérialisée par □□□) et le rapport décharge/charge (D/C) (courbe matérialisée par ○○○), en fonction du nombre de cycles N (fig. 7);
   - le diagramme de Ragone, c'est-à-dire la variation de la capacité C (en mAh/g) en fonction du régime de décharge R (fig. 8).

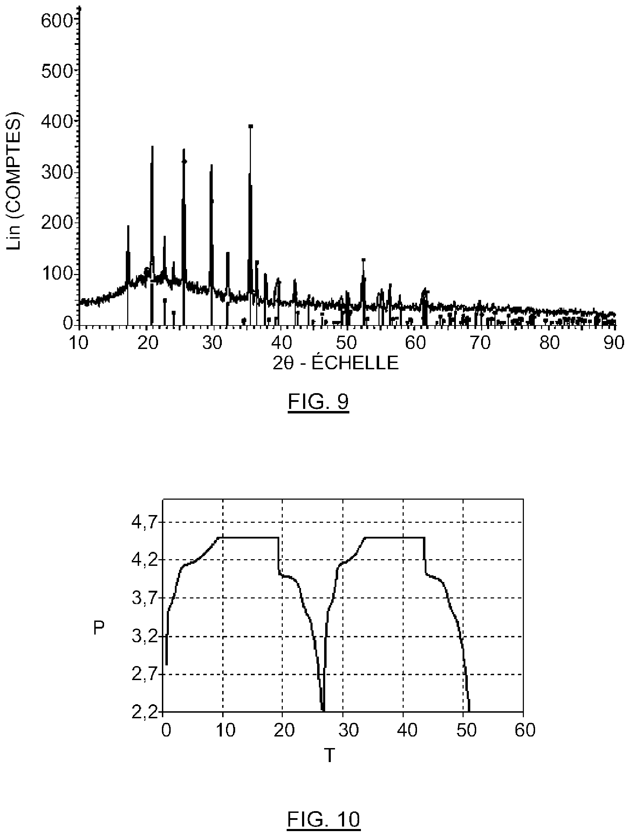

La figure 9 représente le diagramme de diffraction des rayons X d'un composé LiMn_{0,67}Fe_{0,33}PO₄.

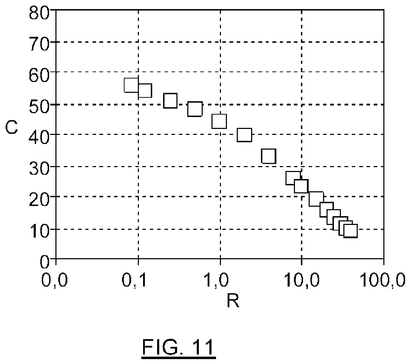

Les figures 10 et 11 sont relatives à une cellule électrochimique ayant une électrode dont la matière active est constituée par des particules de LiMn_{0,67}Fe_{0,33}PO₄ enrobées d'une couche de carbone déposée par pyrolyse d'acétate de cellulose, et elles représentent respectivement:
   - l'évolution du potentiel en fonction du temps, lors d'un fonctionnement à un régime de C/24 (fig. 10);
   - le diagramme de Ragone, c'est-à-dire la variation de la capacité C (en mAh/g) en fonction du régime de décharge R (fig. 11).

### DESCRIPTION DÉTAILLÉE DE L'INVENTION

Un premier objet de l'invention est un matériau d'électrode positive tel que décrit dans les revendications.

Le matériau selon l'invention est préparé à partir des précurseurs de ses éléments constitutifs. Le procédé de préparation comprend les étapes suivantes:
a) préparation de particules d'oxyde OC1 à partir de ses précurseurs;
b) introduction des particules d'oxyde OC1 dans une solution de précurseurs de l'oxyde OC2 et mise en œuvre d'un traitement thermique pour faire réagir les précurseurs de l'oxyde OC2;
c) mise en contact des particules d'oxyde OC1 portant un revêtement d'oxyde OC2, avec un précurseur organique de carbone et mise en œuvre d'un traitement thermique pour réduire le précurseur organique en carbone.

Un précurseur de Li est choisi parmi l'oxyde de lithium Li₂O, l'hydroxyde de lithium, le carbonate de lithium Li₂CO₃, le phosphate neutre Li₃PO₄, le phosphate acide LiH₂PO₄, l'orthosilicate de lithium, le métasilicate de lithium, les polysilicates de lithium, le sulfate de lithium, l'oxalate de lithium et l'acétate de lithium. Plusieurs précurseurs peuvent être utilisés simultanément. Le précurseur de lithium est de préférence Li₂CO₃.

Un précurseur de fer peut être choisi parmi l'oxyde de Fe(III), la magnétite Fe₃O₄, le phosphate de Fe(III), le nitrate de Fe(III), le sulfate de Fe(III), l'hydroxyphosphate de fer et de lithium, le sulfate de Fe(III) et le nitrate de Fe(III)

Un précurseur de manganèse peut être choisi parmi le dioxyde de manganèse, le nitrate de manganèse Mn(NO₃)₂·4H₂O et le sulfate de manganèse MnSO₄H₂O.

Le précurseur de Ni peut être choisi parmi le sulfate NiSO₄·6H₂O, le nitrate Ni(NO₃)₂·6H₂O, l'acétate Ni(CH₃COO)₂.4H₂O, l'oxalate du nickel NiC₂O₄2H₂O, et le phosphate Ni₃(PO₄)₂·7H₂O.

Le précurseur de Co peut être choisi parmi l'oxyde Co₃O₄, le nitrate Co(NO₃)₂-6H₂O, l'acétate (Co(CH₃COO)₂·4H₂O, le sulfate de Co(II), le nitrate du cobalt, l'oxalate de cobalt CoC₂O₄·2H₂O, et le phosphate Co₃(PO₄)₂.

Le pentoxyde de di-vanadium peut être utilisé comme précurseur de V.

Lorsque X ou X' est P, et que le précurseur de Li ou de M n'est pas un phosphate, l'acide phosphorique H₃PO₄ ou l'hydrogénophosphate d'ammonium (NH₄)₂HPO₄ peut être utilisé comme précurseur de P.

Lorsque X ou X' est S, le précurseur de S peut être (NH₄)₂SO₄.

Lorsque X ou X' est Ge, le précurseur de Ge peut être un germanate de tétra-alkyl ammonium.

Dans un mode de réalisation avantageux, on utilise au moins un composé parmi ceux mentionnés ci-dessus qui est précurseur de plusieurs éléments constitutifs de l'oxyde.

La préparation des particules OC1 dans l'étape a) peut être effectuée par les procédés connus dans l'art antérieur, consistant à dissoudre les précurseurs au moins partiellement dans un liquide support, à appliquer un traitement thermique pour faire réagir les précurseurs et provoquer la précipitation de l'oxyde OC1, à laisser refroidir le milieu réactionnel, à récupérer les particules, à les laver et les sécher. La température du traitement thermique est avantageusement de 120°C à 250°C. La température de séchage est avantageusement comprise entre 80 et 140°C.

Dans l'étape b), le traitement thermique est effectué avantageusement à une température comprise entre 120°C et 250°C, et la récupération des particules composites est effectuée d'une manière analogue à celle de l'étape a).

Dans les étapes a) et b), le liquide support des précurseurs est avantageusement de l'eau, de préférence déminéralisée et dégazée.

L'étape c) peut être effectuée de différentes manières.

Selon un premier mode de réalisation, le dépôt de carbone sur les particules composites ayant un cœur d'un oxyde complexe OC1 et un enrobage d'oxyde complexe OC2 peut être effectué par pyrolyse d'un précurseur organique. Le précurseur organique soumis à la pyrolyse peut être choisi parmi les hydrocarbures et leurs dérivés, particulièrement les espèces polycycliques aromatiques telles que le goudron ou le brai, le pérylène et ses dérivés, les composés polyhydriques comme les sucres et les hydrates de carbone, leurs dérivés, et les polymères. Comme exemples de polymères, on peut citer les polyoléfines, les polybutadiènes, l'alcool polyvinylique, les produits de condensation des phénols, y compris ceux obtenus à partir de réaction avec des aldéhydes, les polymères dérivés de l'alcool furfurylique, les polymères dérivés du styrène, du divinylbenzène, du naphtalène, du pérylène, de I'acrylonitrile, et de l'acétate de vinyle, la cellulose, l'amidon et leurs esters et éthers, et leurs mélanges. Lorsque le précurseur est soluble dans l'eau (par exemple le glucose, le lactose et leurs dérivés), la pyrolyse peut être effectuée sur le précurseur en solution aqueuse. La pyrolyse est généralement effectuée à des températures entre 100 et 1000°C.

Selon un deuxième mode de réalisation, le dépôt de carbone sur les particules complexes peut être effectuée par mise en contact desdites particules complexes avec un composé qui a une ou plusieurs liaisons carbone-halogène, et réduction dudit composé, selon le schéma réactionnel CY-CY + 2e⁻ => -C=C- + 2Y⁻ dans lequel Y représente un halogène ou un pseudo-halogène. Cette réaction peut être effectuée à des températures basses ou moyennes, inférieures à 400°C. Par pseudo-halogène, on entend un radical organique ou inorganique susceptible d'exister sous forme d'ion Y⁻ et de former le composé protoné correspondant HY. Parmi les halogènes et pseudo-halogènes, on peut citer en particulier F, Cl, Br, I, CN, SCN, CNO, OH, N₃, RCO₂, RSO₃, R représentant H ou un radical organique. La formation par réduction de liaisons CY est effectuée de préférence en présence d'éléments réducteurs, par exemple l'hydrogène, le zinc, le magnésium les ions Ti³⁺, Ti²⁺, Sm²⁺, Cr²⁺, V²⁺, les tétrakis(dialkylamino éthylène) ou les phosphines. Parmi les composés susceptibles de générer du carbone par réduction, on peut citer les perhalocarbones, en particulier sous forme de polymères tels que l'hexachlorobutadiène et l'hexachlorocyclopentadiène.

Selon un troisième mode de réalisation, le dépôt de carbone sur les particules complexes peut être effectué par mise en contact desdites particules complexes avec un composé qui a une ou plusieurs liaisons -CH-CY- et élimination du composé hydrogéné HY, Y étant tel que défini ci-haut, par une réaction à basse température selon le schéma réactionnel -CH-CY- + B => -C=C-+ BHY. Comme exemples de composés utilisables dans ce mode de réalisation, on peut citer les composés organiques comportant un nombre équivalent d'atomes d'hydrogène et de groupes Y, tels les hydrohalocarbones, en particulier les polymères tel que les polyfluorures, les polychlorure, les polybromures, les polyacétates de vinylidène, et les hydrates de carbone. La déshydro(pseudo)halogénation peut être obtenue à basse température, y compris la température ambiante, par l'action d'une base susceptible de réagir avec le composé HY pour former un sel. La base peut être une base tertiaire, choisie notamment parmi les aminés, les amidines, les guanidines, les imidazoles, ou une base inorganiques choisie parmi les hydroxydes alcalins et les composés organométalliques se comportant comme des bases fortes telles que A(N(Si(CH₃)₃)₂. LiN[CH(CH₃)₂]₂ et le butyl lithium.

Un matériau selon l'invention est particulièrement utile comme matière active de l'électrode positive d'une batterie au lithium. L'électrode positive est constituée par un matériau composite déposé sur un collecteur de courant. Le collecteur de courant est un métal stable en oxydation qui peut être de l'aluminium, du titane, ou un acier inoxydable. Le matériau composite comprend au moins 60% en poids de matériau selon l'invention, éventuellement un liant et/ou un additif conférant une conduction électronique. Le liant peut être un poly(fluorure de vinylydiène) ou PVDF, un copolymère poly(vinylydiène fluoroco-hexafluoropropène) ou PVDF-HFP, un poly(tétrafluoroéthylène) ou PTFE, un poly(éthylène-co-propylène-co-5-méthylène-2-norbornène) (EPDM), un poly(métacrylate de méthyle) ou PMMA, et il représente au plus 15% en poids du matériau composite. L'additif de conduction électronique est choisi avantageusement parmi les matériaux carbonés, en particulier les noirs de carbone, les noirs d'acétylène et les graphites, et il représente au plus 25% en poids du matériau composite.

L'électrode selon l'invention peut être utilisée dans une batterie dont l'électrode négative est une feuille de lithium ou d'alliage intermétallique de lithium, ou un matériau capable d'insérer des ions lithium de manière réversible. L'électrolyte comprend au moins un sel de lithium en solution dans un solvant qui peut être choisi parmi les solvants liquides aprotiques polaires éventuellement gélifiés par addition d'un polymère et les polymères solvatants éventuellement plastifiés par un solvant liquide aprotique. Le sel de lithium peut être choisi parmi les sels classiquement utilisés dans les matériaux à conduction ionique pour des dispositifs électrochimiques fonctionnant par échange d'ions lithium. A titre d'exemple, on peut citer (CF₃SO₂)₂NLi (LiTFSI), (CF₃SO₂)₂CHLi, (CF₃SO₂)₃CLi, CF₃SO₃Li, LiClO₄, LiPF₆, LiBF₄, LiAsF₆, LiBOB, LiFSI ou LiI.

La présente invention est décrite ci-après plus en détails, à l'aide d'exemples de réalisation auxquels elle n'est cependant pas limitée.

### Exemple 1

### Particules de LiMnPO₄ enrobées par LiFePO₄

### Préparation de particules de LiMnPO₄

Sous atmosphère d'azote, on a préparé:
- une solution A par dissolution de 4,62 g de LiOH·H₂O dans 30 mL d'eau déminéralisée et dégazée;
- une solution B par dissolution de 9,27 g de Mn(NO₃)₂·4H₂O dans 50 mL d'eau déminéralisée et dégazée;
- une solution C par dissolution de 4,0 g d'une solution aqueuse à 85% de H₃PO₄ dans 10 mL d'eau déminéralisée et dégazée.

On a mélangé les solutions B et C, puis on y a ajouté graduellement la solution A. On a constaté que la viscosité du milieu réactionnel augmente au fur et à mesure de l'addition de la solution A et le pH final mesuré est de 6,6. Dans le milieu réactionnel ainsi obtenu, la concentration en Mn est 0,4 M et le rapport Li/Mn/P est 3/1/1.

Le milieu réactionnel a ensuite été versé sous atmosphère d'azote dans un récipient en PTFE intégré dans une enceinte pressurisable en acier inoxydable (Parr, volume de 325 ml), et l'ensemble a été mis dans une étuve à 220°C pendant 7 heures, puis refroidi à la température ambiante. La poudre précipitée a été récupérée par filtration, lavée 3 fois avec 100 ml d'eau distillée, puis séchée dans une étuve à 90°C pendant 12 h sous azote.

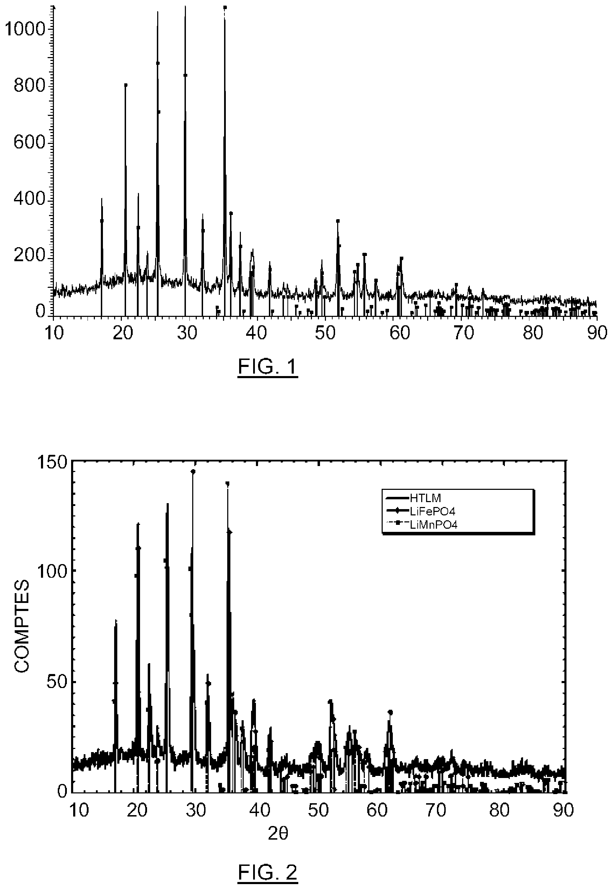

L'ensemble du processus a été reproduit deux fois, et l'on a ainsi obtenu de 12 g d'un composé sous forme d'une poudre de couleur beige. Le diagramme de diffraction des rayons X est représenté sur la figure 1. Il montre que le composé est une phase unique qui présente une structure orthorhombique dont les paramètres sont a = 10,43100 Å; b = 6,09470 Å; c = 4,773660 Å.

### Enrobage des particules de LiMnPO₄ par LiFePO₄

Sous atmosphère d'azote, on a préparé:
- une solution D par dissolution de 3,08 g de LiOH·H₂O dans 40 mL d'eau déminéralisée et dégazée;
- une solution E par dissolution de 10,0 g de FeSO₄·7H₂O et 4,75 g de (NH₄)₂HPO₄ dans 50 mL d'eau déminéralisée et dégazée.

On a ajouté la solution D graduellement à la solution E. Comme précédemment, la viscosité augmente au fur et à mesure de l'addition de la solution D et le pH final mesuré est de 10,3. Dans la solution de précurseurs de LiFePO₄ ainsi obtenue, le rapport Li/Fe/P est 2/1/1.

On a introduit dans cette solution de précurseurs, 10 g de particules de LiMnPO₄ préparé selon le mode opératoire ci-dessus. Le milieu réactionnel ainsi obtenu a été versé sous atmosphère d'azote dans un récipient en PTFE intégré dans une enceinte pressurisable en acier inoxydable (Parr, volume de 325 -ml), et l'ensemble a été mis dans une étuve à 220°C pendant 7 heures, puis refroidi à la température ambiante.

Le composé qui a précipité a été récupéré par filtration, lavé 3 fois avec 100 ml d'eau distillée, puis séché dans une étuve à 90°C pendant 12 h sous azote.

On a ainsi obtenu de 15,1 g d'un composé sous forme d'une poudre de couleur beige. Le diagramme de diffraction des rayons X est représenté sur la figure 2. Sur cette figure:
- les pics identifiés par le signe ◆ correspondent au composé LiFePO₄;
- les pics identifiés par le signe □ correspondent au composé LiMnPO₄.

Il apparaît ainsi que le composé obtenu comprend la phase LiFePO₄ et la phase LiMnPO₄ qui ont toutes deux la structure olivine et la phase orthorhombique avec différents paramètres de réseau:
LiMnPO₄ a = 10,43100, b = 6,09470, c = 4,73660
LiFePO4 a = 6,01890, b = 10,34700, c = 4,70390

### Dépôt de carbone

Le composé obtenu dans l'étape précédente a été introduit dans une solution d'acétate de cellulose dans un mélange acétone-isopropanol (1/1), le rapport acétate/[LiMnPO_{4]}LiFePO₄ étant de 1/7, puis on a soumis le milieu réactionnel, sous atmosphère inerte, à un traitement thermique comprenant une étape de 1 h à 400°C suivie d'une étape de 3 h à 600°C. On a obtenu le matériau final sous forme d'une poudre noire grisâtre.

### Caractérisation

Les performances électrochimiques du matériau obtenu ont été déterminées dans une cellule électrochimique dans laquelle ledit matériau constitue la cathode, l'anode est du lithium métal et l'électrolyte est une solution 1M de LiPF₆ dans un mélange EC-DEC 50/50, avec un régime théorique de C/24.

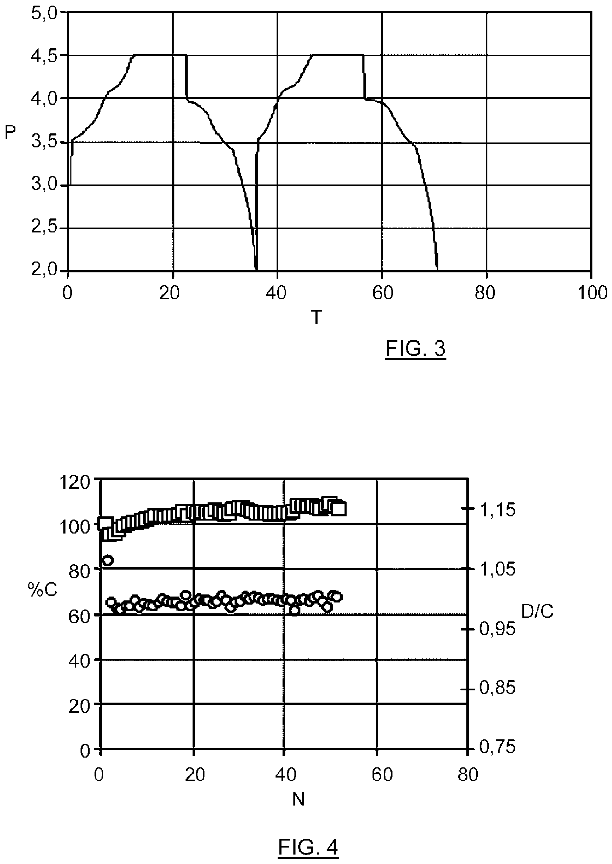

La figure 3 représente l'évolution du potentiel en fonction du temps, lors d'un fonctionnement à un régime de C/24, ce qui correspond théoriquement à un cycle en 48 h. La figure 3 montre une durée de cycle de 36 h, du fait que l'on n'obtient pas toute la capacité théorique. Elle montre également la présence d'un premier plateau à 3,5 V correspondant à Fe et un second plateau à 4,0 V correspondant à Mn. Pour éviter la dégradation du solvant de l'électrolyte, le potentiel est maintenu à 4,5 V au lieu de le faire monter davantage, et ainsi la capacité de la première charge est limitée à 94,9 mAh/g (au lieu de la valeur théorique de 170 mAh/g), ce qui équivaut un taux x de lithium extrait du matériau tel que x = 0,558.

La figure 4 représente le pourcentage de capacité (ordonnée de gauche) et le rapport décharge/charge (D/C) (ordonnée de droite), en fonction du nombre de cycles. Au cours des cycles, la charge est effectuée à un régime de C/4 et la décharge à un régime de 1C. La figure 4 montre que la capacité réversible est de 99,5 mAh/g et que l'efficacité (rapport D/C) reste substantiellement maintenu autour de 99%.

La figure 5 représente le diagramme de Ragone du matériau, c'est-à-dire la variation de la capacité en fonction du régime de décharge. Elle montre que, à un régime de 10C, la capacité délivrée est de 53 mAh/g.

### Exemple 2

### Particules de LiMnPO₄ enrobées par LiFePO₄

On a reproduit le mode opératoire de l'exemple 1 pour la préparation des particules de LiMnPO₄ enrobées par LiFePO₄.

### Dépôt de carbone

Les particules de LiMnPO₄ enrobées par LiFePO₄ ont été introduites dans une solution de lactose dans l'eau le rapport lactose/[LiMnPO4]LiFePO4 étant de 1/10, puis on a soumis le milieu réactionnel à un traitement thermique sous atmosphère inerte comprenant une étape de 1 h à 400°C suivie d'une étape de 3 h à 600°C. On a obtenu le matériau final sous forme d'une poudre noire grisâtre.

### Caractérisation

Les performances électrochimiques du matériau obtenu ont été déterminées de la même manière que dans l'exemple 1. La figure 6 représente l'évolution du potentiel en fonction du temps. Elle montre que la capacité de la première charge est de 116 mAh/g, ce qui équivaut un taux de lithium extrait du matériau x = 0,682.

La figure 7 représente le pourcentage de capacité (ordonnée de gauche) et le rapport décharge/Charge (D/C) (ordonnée de droite), en fonction du nombre de cycles. Au cours des cycles, la charge est effectuée à un régime de C/4 et la décharge à un régime de 1C. La figure 7 montre que la capacité réversible est de 119,3 mAh/g et que le rapport D/C reste substantiellement constant.

La figure 8 représente le diagramme de Ragone du matériau, c'est-à-dire la variation de la capacité en fonction du régime de décharge. Elle montre que, à un régime de 10C, la capacité délivrée est de 65,5 mAh/g.

### Exemple comparatif

### Particules de LiMn_{0,67}Fe_{0,33}PO₄

A titre comparatif, on a préparé des particules d'un phosphate LiMPO₄ dans lequel M représente Fe partiellement remplacé par Mn, et on a déposé sur lesdites particules un revêtement de carbone par carbonisation d'un précurseur carboné de la même manière que dans l'exemple 1.

### Préparation de particules de LiMn_{0,67}Fe_{0,33}PO₄

Sous atmosphère d'azote, on a préparé :
- une solution A par dissolution de 4,62 g de LiOH·H₂O dans 30 mL d'eau déminéralisée et dégazée;
- une solution F par dissolution de 3,33 g de FeSO₄·7H₂O, 4,02g de MnSO₄·H₂O et 4,75g de (NH₄)₂HPO₄ dans 50 mL d'eau déminéralisée et dégazée.

On a ajouté graduellement la solution A à la solution F. On a constaté que la viscosité du milieu réactionnel augmente au fur et à mesure de l'addition de la solution A et le pH final mesuré est de 10,7. Dans le milieu réactionnel ainsi obtenu, le rapport Li/Mn/Fe/P est de 3/0,66/0,33/1.

Le milieu réactionnel a ensuite était versé sous atmosphère d'azote dans un récipient en PTFE intégré dans une enceinte pressurisable en acier inoxydable (Parr, volume de 325 ml), et l'ensemble a été mis dans une étuve à 220°C pendant 7 heures, puis refroidi à la température ambiante. La poudre précipitée a été récupérée par filtration, lavée 3 fois avec 100 ml d'eau distillée et puis séchée dans une étuve à 90°C pendant 12 h sous azote.

On a ainsi obtenu de 6,2 g d'un composé sous forme d'une poudre de couleur gris clair. Le diagramme de diffraction des rayons X est représenté sur la figure 9. Il montre que le composé est une phase unique qui présente une structure orthorhombique.

### Dépôt de carbone

Le composé obtenu dans l'étape précédente a été introduit dans une solution d'acétate de cellulose dans un mélange acétone-isopropanol (1 :1), le rapport acétate / LiMn_{0,67}Fe_{0,33}PO₄ étant de 1/7, puis on a soumis le milieu réactionnel à un traitement thermique sous atmosphère inerte comprenant une étape de 1 h à 400°C suivie d'une étape de 3 h à 600°C. On a obtenu le matériau final sous forme d'une poudre noire grisâtre.

### Caractérisation

Les performances électrochimiques du matériau obtenu ont été déterminées de la même manière que dans l'exemple 1.

La figure 10 représente l'évolution du potentiel en fonction du temps. Elle montre que la capacité de la première charge est de 54,5 mAh/g, ce qui équivaut un taux de lithium extrait du matériau x= 0,32. La capacité réversible est de 55,7 mAh/g.

La figure 11 représente le diagramme de Ragone du matériau. Elle montre que, à un régime de 10C, la capacité délivrée est de 23,3 mAh/g.

Il apparaît ainsi que, pour des matériaux ayant une composition globale similaire, la forme "particules comprenant un noyau de LiMnPO₄ enrobé de LiFePO₄" donne des performances électrochimiques nettement supérieures à celles de la forme "particules d'un oxyde complexe LiFe₁₋ₙMnₙPO₄", les particules portant, dans les deux cas, un dépôt de carbone.

## Revendications

1. Matériau d'électrode positive constitué de particules ayant un cœur d'un oxyde complexe OC1, un enrobage au moins partiel d'un oxyde complexe OC2 et une couche adhérente de carbone à la surface des particules d'oxyde, ledit matériau étant **caractérisé en ce que**:
- l'oxyde complexe OC1 est LiMnPO₄ dans lequel Mn peut être remplacé partiellement par Co et/ou Ni,
- l'oxyde OC2 est un oxyde de Li et d'au moins un métal qui a un effet catalytique sur la réaction de dépôt de carbone et qui est choisi parmi Fe, Mo, Ni, Pt et Pd, et
- le cœur d'oxyde OC1 a une dimension moyenne de 20 nm à 100 µm, la couche d'oxyde OC2 a une épaisseur de 1 nm à 6µm, et le dépôt de carbone a une épaisseur de 0,1 nm à 100 nm.

2. Matériau selon la revendication 1, **caractérisé en ce que** l'oxyde OC2 est choisi parmi LiFeBO₃, LiFePO₄, LiFeVO₄, Li₂FeSiO₄, LiFeTiO₄ et Li₂FeGeO₄.

3. Procédé de préparation d'un matériau selon la revendication 1, **caractérisé en ce qu'**il comprend les étapes suivantes :
a) préparation de particules d'oxyde OC1 à partir de ses précurseurs;
b) introduction des particules d'oxyde OC1 dans une solution de précurseurs de l'oxyde OC2 et mise en œuvre d'un traitement thermique pour faire réagir les précurseurs de l'oxyde OC2;
c) mise en contact des particules d'oxyde OC1 portant un revêtement d'oxyde OC2, avec un précurseur organique de carbone et mise en œuvre d'un traitement thermique pour réduire le précurseur organique en carbone.

4. Procédé selon la revendication 3, **caractérisé en ce que** la préparation des particules OC1 dans l'étape a) est effectuée par un procédé consistant à dissoudre les précurseurs au moins partiellement dans un liquide support, à appliquer un traitement thermique pour faire réagir les précurseurs et provoquer la précipitation de l'oxyde OC1, à laisser refroidir le milieu réactionnel, à récupérer les particules, à les laver et les sécher.

5. Procédé selon la revendication 4, **caractérisé en ce que** le traitement thermique est effectué à une température comprise entre 120°C et 250°C.

6. Procédé selon la revendication 3, **caractérisé en ce que** le traitement thermique de l'étape b) est effectué à une température comprise entre 120°C et 250°C.

7. Procédé selon la revendication 3, **caractérisé en ce que** l'étape c) est effectuée selon l'une des modalités suivantes :
- pyrolyse d'un précurseur organique, choisi parmi les hydrocarbures et leurs dérivés, les composés polyhydriques et les polymères;
- mise en contact des particules complexes issues de l'étape b) avec un composé qui a une ou plusieurs liaisons carbone-halogène, et réduction dudit composé, à des températures basses ou moyennes, inférieures à 400°C;
- mise en contact des particules complexes issues de l'étape b) avec un composé qui a une ou plusieurs liaisons -CH-CY- et élimination du composé hydrogéné HY, Y, par une réaction à basse température, selon le schéma réactionnel -CH-CY- + B => -C=C- + BHY, dans lequel Y désigne un halogène ou un pseudo-halogène et B désigne une base.

8. Electrode constituée par un matériau composite déposé sur un collecteur de courant, **caractérisée en ce que** ledit matériau composite comprend un matériau selon la revendication 1 comme matière active.

9. Electrode selon la revendication 8, **caractérisé en ce que** le collecteur de courant est un métal stable en oxydation choisi parmi l'aluminium, le titane, et l'acier inoxydable.

10. Electrode selon la revendication 8, **caractérisée en ce que** le matériau composite comprend au moins 60% en poids de matière active, un liant et/ou un additif conférant une conduction électronique.

11. Batterie comprenant une électrode positive, une électrode négative et un électrolyte, dans laquelle l'électrode négative est une feuille de lithium ou d'alliage intermétallique de lithium, ou un matériau capable d'insérer des ions lithium de manière réversible, et l'électrolyte comprend au moins un sel de lithium en solution dans un solvant qui peut être choisi parmi les solvants liquides aprotiques polaires éventuellement gélifiés par addition d'un polymère et les polymères solvatants éventuellement plastifiés par un solvant liquide aprotique, **caractérisé en ce que** l'électrode positive est une électrode selon la revendication 8.

## Patentansprüche

1. Positives Elektrodenmaterial, bestehend aus Teilchen, die einen Kern aus einem komplexen Oxid OC1, eine mindestens teilweise Umhüllung aus einem komplexen Oxid OC2 und eine anhaftende Schicht aus Kohlenstoff auf der Oberfläche der Oxidteilchen aufweist, wobei das Material **dadurch gekennzeichnet ist, dass**:
- das komplexe Oxid OC1 ist LiMnPO₄ ist, wobei Mn teilweise durch Co und/oder Ni ersetzt sein kann,
- das Oxid OC2 ein Oxid von Li und mindestens einem Metall ist, das eine katalytische Wirkung auf die Kohlenstoffabscheidungsreaktion aufweist und das ausgewählt ist aus Fe, Mo, Ni, Pt und Pd, und
- der OC1-Oxidkern eine durchschnittliche Größe von 20 nm bis 100 µm, die OC2-Oxidschicht hat eine Stärke von 1 nm bis 6 µm aufweist, und die Kohlenstoffablagerung eine Stärke von 0,1 nm bis 100 nm aufweist.

2. Material nach Anspruch 1, **dadurch gekennzeichnet, dass** das Oxid OC2 ausgewählt ist aus LiFeBO₃, LiFePO₄, LiFeVO₄, Li₂FeSiO₄, LiFeTiO₄ und Li₂FeGeO₄.

3. Verfahren zur Herstellung eines Materials nach Anspruch 1, **dadurch gekennzeichnet, dass** es die folgenden Schritte umfasst:
a) Herstellung von Oxidteilchen OC1 ausgehend von ihren Vorläufern;
b) Einbringen der Oxidteilchen OC1 in eine Lösung von Oxidvorläufern OC2 und Durchführen einer Wärmebehandlung, um die Oxidvorläufer OC2 reagieren zu lassen;
c) Inkontaktbringen von Oxidteilchen OC1, die eine Oxidschicht OC2 tragen, mit einem organischen Kohlenstoffvorläufer und Durchführen einer Wärmebehandlung, um den organischen Vorläufer zu Kohlenstoff zu reduzieren.

4. Verfahren nach Anspruch 3, **dadurch gekennzeichnet, dass** die Herstellung der Teilchen OC1 in Schritt a) durch ein Verfahren ausgeführt wird, das darin besteht, die Vorläufer mindestens teilweise in einer Trägerflüssigkeit aufzulösen, eine Wärmebehandlung anzuwenden, um die Vorläufer reagieren zu lassen und die Präzipitation des Oxids OC1 zu bewirken, das Reaktionsmedium abkühlen zu lassen, ein Gewinnen der Teilchen, deren Waschen und Trocknen.

5. Verfahren nach Anspruch 4, **dadurch gekennzeichnet, dass** die Wärmebehandlung bei einer Temperatur zwischen 120 °C und 250 °C ausgeführt wird.

6. Verfahren nach Anspruch 3, **dadurch gekennzeichnet, dass** die Wärmebehandlung von Schritt b) bei einer Temperatur zwischen 120 °C und 250 °C ausgeführt wird.

7. Verfahren nach Anspruch 3, **dadurch gekennzeichnet, dass** Schritt c) auf eine der folgenden Arten ausgeführt wird:
- Pyrolyse eines organischen Vorläufers, ausgewählt aus den Kohlenwasserstoffen und ihren Derivaten, mehrwertigen Verbindungen und den Polymeren;
- Inkontaktbringen der komplexen Teilchen aus Schritt b) mit einer Verbindung, die eine oder mehrere Kohlenstoff-Halogen-Bindungen aufweist, und Reduzieren der Verbindung bei niedrigen oder mittleren Temperaturen unter 400 °C;
- Inkontaktbringen der komplexen Teilchen aus Schritt b) mit einer Verbindung, die eine oder mehrere -CH-CY-Bindungen aufweist, und Entfernen der hydrierten Verbindung HY, Y, durch eine Reaktion bei niedriger Temperatur gemäß dem Reaktionsschema -CH-CY- + B => -C=C- + BHY, wobei Y Halogen oder Pseudohalogen bezeichnet und B eine Base bezeichnet.

8. Elektrode, die aus einem auf einem Stromkollektor abgeschiedenen Verbundmaterial besteht, **dadurch gekennzeichnet, dass** das Verbundmaterial ein Material nach Anspruch 1 als aktives Material umfasst.

9. Elektrode nach Anspruch 8, **dadurch gekennzeichnet, dass** der Stromkollektor ein oxidationsstabiles Metall ist, ausgewählt aus Aluminium, Titan und rostfreiem Stahl.

10. Elektrode nach Anspruch 8, **dadurch gekennzeichnet, dass** das Verbundmaterial mindestens 60 Gewichtsprozent aktives Material, ein Bindemittel und/oder ein elektronisch leitfähiges Additiv umfasst.

11. Batterie, umfassend eine positive Elektrode, eine negative Elektrode und einen Elektrolyten, wobei die negative Elektrode eine Folie aus Lithium oder einer intermetallischen Lithiumlegierung oder ein Material ist, das Lithiumionen reversibel einfügen kann, und der Elektrolyt mindestens ein Lithiumsalz in Lösung in einem Lösungsmittel umfasst, das ausgewählt sein kann aus polaren aprotischen flüssigen Lösungsmitteln, die optional durch Hinzufügen eines Polymers geliert sind, und solvatisierenden Polymeren, die optional durch ein aprotisches flüssiges Lösungsmittel plastifiziert sind, **dadurch gekennzeichnet, dass** die positive Elektrode eine Elektrode nach Anspruch 8 ist.

## Claims

1. Positive electrode material composed of particles having a core of a complex oxide CO1, an at least partial coating of a complex oxide CO2 and an adherent layer of carbon on the surface of the oxide particles, said material being **characterized in that**:
- the complex oxide CO1 is LiMnPO₄ in which Mn can be partially replaced by Co and/or Ni,
- the oxide CO2 is an oxide of lithium and of at least one metal which has a catalytic effect on the carbon deposition reaction, and which is selected from Fe, Mo, Ni, Pt and Pd, and
- the core of oxide CO1 has a mean size from 20 nm to 100 µm, the layer of oxide CO2 has a thickness from 1 nm to 6 µm and the carbon deposit has a thickness from 0.1 nm to 100 nm.

2. Material according to claim 1, **characterized in that** the oxide CO2 is selected from LiFeBO₃, LiFePO₄, LiFeVO₄, Li₂FeSiO₄, LiFeTiO₄ and Li₂FeGeO₄.

3. Process for the preparation of a material according to claim 1, **characterized in that** it comprises the following steps:
a) preparation of oxide CO1 particles from its precursors;
b) introducing the oxide CO1 particles into a solution of precursors of the oxide CO2 and carrying out a heat treatment in order to react the precursors of the oxide CO2;
c) contacting the oxide CO1 particles carrying a coating of oxide CO2 with an organic carbon precursor and carrying out a heat treatment to reduce the organic precursor to carbon.

4. Process according to claim 3, **characterized in that** the preparation of the CO1 particles in step a) is carried out by a process consisting in at least partially dissolving the precursors in a carrier liquid, in applying a heat treatment in order to make the precursors react and to induce precipitation of the oxide CO1, in allowing the reaction medium to cool, in recovering the particles, in washing them and in drying them.

5. Process according to claim 4, **characterized in that** the heat treatment is carried out at a temperature of between 120°C and 250°C.

6. Process according to claim 3, **characterized in that** the heat treatment of step b) is carried out at a temperature of between 120°C and 250°C.

7. Process according to claim 3, **characterized in that** step c) is carried out according to one of the following methods:
- pyrolyzing of an organic precursor selected from hydrocarbons and their derivatives, polyhydric compounds and polymers;
- contacting the complex particles resulting from step b) with a compound having one or more carbon-halogen bonds, and reducing said compound at low or moderate temperatures below 400°C;
- contacting the complex particles resulting from step b) with a compound having one or more -CH-CY- bonds and eliminating the hydrogenated compound HY by a lowtemperature reaction, according to the reaction scheme -CH-CY- + B => -C=C + BHY, in which Y denotes a halogen or a pseudohalogen and B denotes a base.

8. Electrode consisting of a composite material deposited on a current collector, **characterized in that** said composite material comprises a material according to claim 1 as active material.

9. Electrode according to claim 8, **characterized in that** the current collector is a metal stable toward oxidation selected from aluminum, titanium and stainless steel.

10. Electrode according to claim 8, **characterized in that** the composite material comprises at least 60% by weight of active material, a binder and/or an additive which confers electronic conduction.

11. Battery comprising a positive electrode, a negative electrode and an electrolyte, wherein the negative electrode is a sheet of lithium or of an intermetallic lithium alloy, or a material capable of reversibly inserting lithium ions, and the electrolyte comprises at least one lithium salt in solution in a solvent which can be selected from polar aprotic liquid solvents optionally gelled by addition of a polymer, and solvating polymers optionally plasticized by an aprotic liquid solvent, **characterized in that** the positive electrode is an electrode as claimed in claim 8.
